# EUROPEAN PATENT APPLICATION

(11) **EP 4 543 114 A1**
(43) Date of publication of application: **23.04.2025**
(21) Application number: 22946198.3
(22) Date of filing: 15.06.2022
(51) Int. Cl.: H04W 72/04

(54) **WIRELESS COMMUNICATION METHOD AND APPARATUS, AND DEVICE, STORAGE MEDIUM AND PROGRAM PRODUCT**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2022/099009
(87) International publication number: WO 2023/240504

(57) **Abstract**

A wireless communication method and apparatus, and a device, a storage medium and a program product, which are related to the technical field of communications. The method comprises: a terminal device receiving at least one measurement signal by means of a second receiver, wherein different measurement signals correspond to different spatial information, and the terminal device comprises a first receiver and the second receiver, the second receiver being used for receiving a wake-up signal (910). With regard to a terminal device provided with a first receiver and a second receiver, the second receiver is further used for receiving a measurement signal in addition to receiving a wake-up signal, and since different measurement signals correspond to different spatial information, the terminal device can perform beam management according to the measurement signal received by the second receiver, thereby ensuring that a suitable beam is used for communication between the terminal device and a network device, and improving the communication quality and reliability.

## Description

### TECHNICAL FIELD

Embodiments of the present disclosure relate to the technical field of communications, and in particular, relate to a method and apparatus for wireless communication, and a device, a storage medium and a program product thereof.

### BACKGROUND

A terminal device communicates with a network device over beams. Currently, beam management between the terminal device and the network device needs to be further researched.

### SUMMARY

Various embodiments of the present disclosure provide a method and apparatus for wireless communication, and a device, a storage medium and a program product thereof. The technical solutions are as follows.

According to one aspect of the embodiments of the present disclosure, a method for wireless communication is provided. The method is applicable to a terminal device. The terminal device includes a first receiver and a second receiver, wherein the second receiver is configured to receive a wake-up signal.

The method includes: receiving at least one measurement signal using the second receiver, wherein different measurement signals correspond to different spatial information.

According to one aspect of the embodiments of the present disclosure, a method for wireless communication is provided. The method is applicable to a terminal device. The terminal device includes a first receiver and a second receiver. The method includes:
in a case that the first receiver is in a non-operating state, switching the first receiver from the non-operating state to an operating state in response to the second receiver receiving a wake-up signal; and
performing a beam failure recovery procedure upon switching of the first receiver to the operating state.

According to one aspect of the embodiments of the present disclosure, a method for wireless communication is provided. The method is applicable to a terminal device. The terminal device includes a first receiver and a second receiver, wherein the second receiver is configured to receive a wake-up signal.

The method includes: adjusting a running state of a beam failure detection timer and/or a running state of a beam failure counter upon switching of the first receiver from a non-operating state to an operating state.

According to one aspect of the embodiments of the present disclosure, a method for wireless communication is provided. The method is applicable to a zero-power terminal. The method includes:
receiving at least one measurement signal, wherein different measurement signals correspond to different spatial information; and
transmitting indication information of a target measurement signal of the at least one measurement signal by active transmission or backscattering.

According to one aspect of the embodiments of the present disclosure, an apparatus for wireless communication is provided. The apparatus is provided in a terminal device. The terminal device includes a first receiver and a second receiver, wherein the second receiver is configured to receive a wake-up signal.

The apparatus includes: a receiver module, configured to receive at least one measurement signal using the second receiver, wherein different measurement signals correspond to different spatial information.

According to one aspect of the embodiments of the present disclosure, an apparatus for wireless communication is provided. The apparatus is provided in a terminal device. The terminal device includes a first receiver and a second receiver. The apparatus includes:
a switching module, configured to: in a case that the first receiver is in a non-operating state, switch the first receiver from the non-operating state to an operating state in response to the second receiver receiving a wake-up signal; and
a performing module, configured to perform a beam failure recovery procedure upon switching of the first receiver to the operating state.

According to one aspect of the embodiments of the present disclosure, an apparatus for wireless communication is provided. The apparatus is provided in a terminal device. The terminal device includes a first receiver and a second receiver, wherein the second receiver is configured to receive a wake-up signal.

The apparatus includes: an adjusting module, configured to adjust a running state of a beam failure detection timer and/or a running state of a beam failure counter upon switching of the first receiver from a non-operating state to an operating state.

According to one aspect of the embodiments of the present disclosure, an apparatus for wireless communication is provided. The apparatus is provided in a zero-power terminal. The apparatus includes:
a receiver module, configured to receive at least one measurement signal, wherein different measurement signals correspond to different spatial information; and
a transmitter module, configured to transmit indication information of a target measurement signal of the at least one measurement signal by active transmission or backscattering.

According to one aspect of the embodiments of the present disclosure, a terminal device is provided. The terminal device includes: a processor and a memory. The memory is configured to store one or more computer programs. The processor, when loading and running the one or more computer programs, is caused to perform any one of the methods for wireless communication described above.

According to one aspect of the embodiments of the present disclosure, a computer-readable storage medium is provided. The computer-readable storage medium stores one or more computer programs. The one or more computer programs, when loaded and run by a processor, cause the processor to perform any one of the methods for wireless communication described above.

According to one aspect of the embodiments of the present disclosure, a chip is provided. The chip includes a programmable logic circuit and/or one or more program instructions. The chip, when running, is caused to perform any one of the methods described above for wireless communication.

According to one aspect of the embodiments of the present disclosure, a computer program product is provided. The computer program product includes one or more computer instructions stored in a computer-readable storage medium. The one or more computer instructions, when read from the computer-readable storage medium and executed by a processor, cause the processor to perform any one of the methods for wireless communication described above.

The technical solutions according to the embodiments of the present disclosure achieve the following beneficial effects.

For the terminal device equipped with the first receiver and the second receiver, the second receiver is configured to receive a measurement signal in addition to a wake-up signal. Since different measurement signals correspond to different spatial information, the terminal device is capable of performing beam management based on the measurement signal received by the second receiver, thereby ensuring that the terminal device and the network device communicate with each other using an appropriate beam, such that the quality and reliability of communication are improved.

### BRIEF DESCRIPTION OF DRAWINGS

FIG. 1 is a schematic diagram of a network architecture according to some embodiments of the present disclosure;
FIG. 2 is a schematic diagram of a DRX mechanism according to some embodiments of the present disclosure;
FIG. 3 is a schematic diagram of an energy-saving signal indicating whether a UE monitors a PDCCH according to some embodiments of the present disclosure;
FIG. 4 is a schematic diagram of a position of a PF and a position of a PO within a PF during a paging DRX cycle according to some embodiments of the present disclosure;
FIG. 5 is a schematic diagram of an energy-saving signal indicating whether a UE of one or more paging subgroups receives paging on a corresponding PF or PO according to some embodiments of the present disclosure;
FIG. 6 is a block diagram of a receiver system based on zero-power wake-up according to some embodiments of the present disclosure;
FIG. 7 is a schematic diagram of an OOK modulation principle according to some embodiments of the present disclosure;
FIG. 8 is a schematic diagram of beams in different directions according to some embodiments of the present disclosure;
FIG. 9 is a flowchart of a method for wireless communication according to some embodiments of the present disclosure;
FIG. 10 is a schematic diagram of different frequency domain locations of transmission resources used by measurement signals with different spatial information according to some embodiments of the present disclosure;
FIG. 11 is a flowchart of a method for wireless communication according to some embodiments of the present disclosure;
FIG. 12 is a flowchart of a method for wireless communication according to some embodiments of the present disclosure;
FIG. 13 is a schematic diagram of an indication of a BWP to be activated by a wake-up signal according to some embodiments of the present disclosure;
FIG. 14 is a flowchart of a method for wireless communication according to some embodiments of the present disclosure;
FIG. 15 is a flowchart of a method for wireless communication according to some embodiments of the present disclosure;
FIG. 16 is a schematic diagram of a backscattering principle according to some embodiments of the present disclosure;
FIG. 17 is a block diagram of an apparatus for wireless communication according to some embodiments of the present disclosure;
FIG. 18 is a block diagram of an apparatus for wireless communication according to some embodiments of the present disclosure;
FIG. 19 is a block diagram of an apparatus for wireless communication according to some embodiments of the present disclosure;
FIG. 20 is a block diagram of an apparatus for wireless communication according to some embodiments of the present disclosure; and
FIG. 21 is a schematic structural diagram of a terminal device according to some embodiments of the present disclosure.

### DETAILED DESCRIPTION

For clearer descriptions of the objectives, technical solutions and advantages of the present disclosure, the embodiments of the present disclosure are described in detail hereinafter in combination with the accompanying drawings.

In the embodiments of the present disclosure, the network architecture and the service scenarios are intended to describe the technical solutions according to the embodiments of the present disclosure more clearly, and do not constitute any limitation on the technical solutions according to the embodiments of the present disclosure. Those of ordinary skill in the art understand that, with the evolution of the network architecture and the emergence of new service scenarios, the technical solutions according to the embodiments of the present disclosure are also applicable to similar technical problems.

The technical solutions according to the embodiments of the present disclosure are applicable to various communication systems, for example, a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN) system, a wireless fidelity (Wi-Fi) system, a 5^{th} generation (5G) system, or other communication systems.

Generally, a conventional communication system supports a limited number of connections and is easy to implement. However, with the development of communication technologies, a mobile communication system supports not only the traditional communications, but also other communications, such as device-to-device (D2D) communications, machine-to-machine (M2M) communications, machine-type communications (MTC), vehicle-to-vehicle (V2V) communications, and vehicle-to-everything (V2X) communications. The embodiments of the present disclosure are also applicable to these communication systems.

The communication system in the embodiments of the present disclosure is applicable to a carrier aggregation (CA) scenario, a dual connectivity (DC) scenario, and a standalone (SA) networking scenario.

The communication system in the embodiments of the present disclosure is applicable to an unlicensed spectrum, and the unlicensed spectrum may also be construed as a shared spectrum. Alternatively, the communication system in the embodiments of the present disclosure is applicable to a licensed spectrum, and the licensed spectrum may also be construed as a non-shared spectrum.

The embodiments of the present disclosure are applicable to the NTN system, and are also applicable to a terrestrial networks (TN) system.

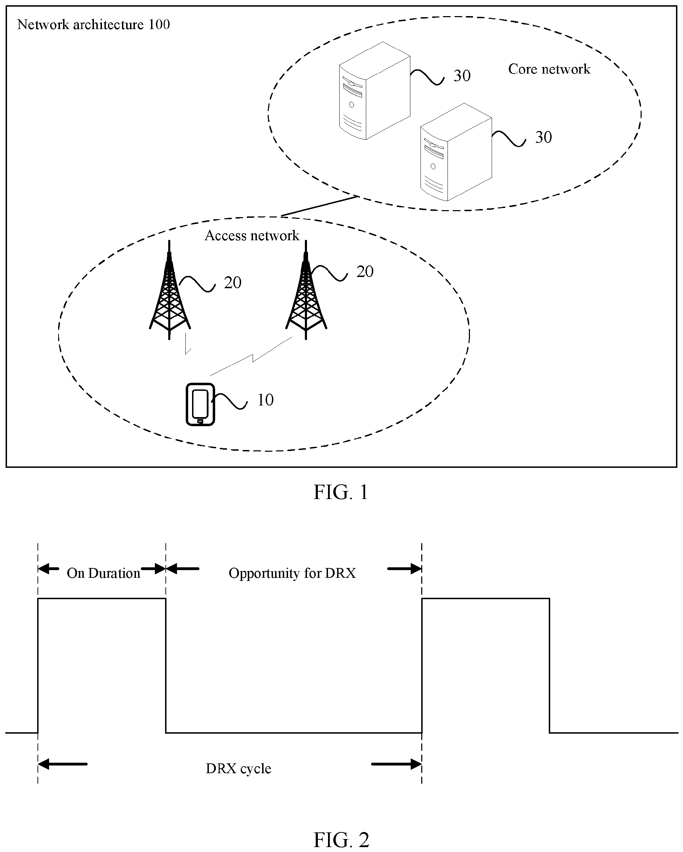

FIG. 1 is a schematic diagram of a network architecture 100 according to some embodiments of the present disclosure. Referring to FIG. 1, the network architecture 100 includes a terminal device 10, an access network device 20, and a core network device 30.

The terminal device 10 refers to a user equipment (UE), an access terminal, a subscriber unit, a subscriber station, a mobile station, a mobile console, a remote station, a remote terminal, a mobile device, a wireless communication device, a user proxy, a user device, or the like. In some embodiments, the terminal device 10 is a cellular phone, a cordless phone, a Session Initiation Protocol (SIP) phone, a wireless local loop (WLL) station, a personal digital assistant (PDA), a handheld device with a wireless communication function, a computing device or other processing devices connected to a wireless modem, an in-vehicle device, a wearable device, a terminal device the 5G system, a terminal device in an evolved public land mobile network (PLMN), or the like, which is not limited in the embodiments of the present disclosure. For convenience of description, the devices above are collectively referred to as terminal devices. A plurality of terminal devices 10 are usually deployed, and one or more terminal devices 10 may be distributed in a cell managed by each access network device 20. In the embodiments of the present disclosure, the "terminal device" and the "UE" are usually used interchangeably, but those skilled in the art understand that the two generally have the same meaning.

The access network device 20 is a device deployed in an access network for providing a wireless communication function for the terminal device 10. The access network device 20 may include various forms of macro base stations, micro base stations, relay stations, access points, and the like. In systems adopting different wireless access technologies, a device with the function of an access network device may have different names. For example, in the 5G NR system, the device is referred to as gNodeB or gNB. With the evolution of communications technologies, the name "access network device" may vary. For convenience of description, in the embodiments of the present disclosure, the above devices that provide the wireless communication function for the terminal device 10 are collectively referred to as the access network device. In some embodiments, a communication relationship may be established between the terminal device 10 and the core network device 30 using the access network device 20. Exemplarily, in a long-term evolution (LTE) system, the access network device 20 may be an evolved universal terrestrial radio access network (EUTRAN) or one or more eNodeBs in the EUTRAN; and in the 5G NR system, the access network device 20 may be a radio access network (RAN) or one or more gNBs in the RAN. In the embodiments of the present disclosure, unless otherwise specified, the "network device" refers to the access network device 20, such as a base station.

The core network device 30 is a device deployed in the core network. The core network device 30 mainly functions to provide a user connection, user management and service bearing, and to provide an interface to an external network as a bearer network. For example, the core network device in the 5G NR system may include devices such as an access and mobility management function (AMF) entity, a user plane function (UPF) entity, and a session management function (SMF) entity.

In some embodiments, the access network device 20 communicates with the core network device 30 using the air interface technology, such as an NG interface in the 5G NR system. The access network device 20 communicates with the terminal device 10 using the air interface technology, such as a Uu interface.

The "5G NR system" in the embodiments of the present disclosure may also be referred to as a 5G system or an NR system, but those skilled in the art may understand their meanings. The technical solutions according to the embodiments of the present disclosure may be applicable to the LTE system, the 5G NR system, a subsequent evolution system of the 5G NR system, or other communication systems such as a narrow band Internet of things (NB-IoT) system, which is not limited in the embodiments of the present disclosure.

In the embodiments of the present disclosure, the network device provides services for cells, and the terminal device communicates with the network device over the transmission resources (such as frequency domain resources or frequency spectrum resources) on carriers used by the cells. The cell may be a cell corresponding to the network device (e.g., a base station), and the cell may belong to a macro base station or a base station corresponding to a small cell. The small cell includes a metro cell, a micro cell, a pico cell, a femto cell, or the like. The small cells have the characteristics of small coverage and low transmit power, and are applicable to providing high rate data transmission services.

Prior to description of the technical solutions according to the present disclosure, some background technical knowledge involved in the present disclosure is first introduced. The following related arts, as optional solutions, may be arbitrarily combined with the technical solutions according to the embodiments of the present disclosure, and all of the combinations fall within the scope of protection of the embodiments of the present disclosure. The embodiments of the present disclosure include at least some of the following content.

### 1. UE energy saving based on physical downlink control channel (PDCCH)

In the evolution of the 5G mobile communication system, stricter requirements are imposed on power saving of UEs. For example, for the existing discontinuous reception (DRX) mechanism, during each ON duration, a UE is required to continuously monitor the PDCCH to determine whether the base station has scheduled data transmission to the UE. As shown in FIG. 2, the DRX mechanism includes configuring a DRX cycle for a UE in a radio resource control (RRC)_CONNECTED state, and a DRX cycle consists of an "On Duration" and an "Opportunity for DRX". During the On Duration, the UE monitors and receives downlink channels including a PDCCH and signals; and during the Opportunity for DRX, the UE does not receive downlink channels such as the PDCCH and signals to reduce power consumption.

However, most UEs may not have the need to receive data transmission for a long period of time, but still needs to maintain a periodic wake-up mechanism to monitor possible downlink transmission. For such UEs, there is room for further optimization of power saving. In the related standards, energy-saving signals are introduced for energy saving of UEs in the RRC_CONNECTED state to achieve further energy saving. The energy-saving signal is used in combination with the DRX mechanism, and the UE receives an indication from the energy-saving signal prior to the DRX ON duration. In the case that the UE needs to transmit or receive data in one DRX cycle, the energy-saving signal "wakes up" the UE to monitor the PDCCH during the DRX ON duration. In the case that the UE does not need to transmit or receive data in one DRX cycle, the energy-saving signal does not "wake up" the UE, and the UE is not required to monitor the PDCCH during the DRX ON duration. The energy-saving signal is carried over the PDCCH channel in a downlink control information (DCI) format 2_6.

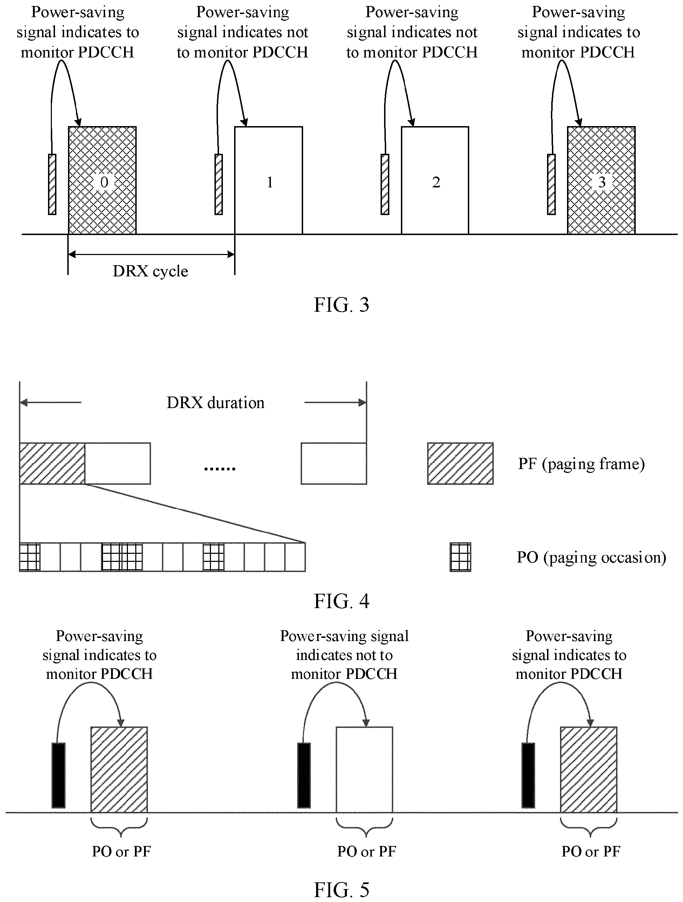

The process of the energy-saving signal indicating whether the UE monitor the PDCCH during the DRX ON duration is shown in FIG. 3. In the relevant standards, the energy saving for the process of receiving paging messages by the UE in an RRC_IDEL/RRC_INACTIVE state is optimized, and similar energy-saving signals are introduced. In the case that paging messages are received in a DRX manner, one paging occasion (PO) exists during one DRX cycle, and the UE receives the paging messages only at the PO, but does not receive the paging messages at times other than the PO, so as to achieve power saving. A paging frame (PF) indicates a system frame number on which a paging message should appear, and the PO indicates a possible moment of appearance. One PF may include one or more POs, and during each DRX cycle or paging cycle, the UE is only required to monitor the PO belonging to the UE itself. The UE calculates the PF corresponding to the UE itself and the position of the PO in the PF based on the identifier (ID) of the UE itself, e.g., the position of the PF and the position of the PO in the PF in one paging DRX cycle, as shown in FIG. 4.

However, the probability that the UE is paged may not be high in practice, and the UE periodically detects the PDCCH at the corresponding PO, but does not detect the paging indication information transmitted to the UE itself, resulting in a waste of power. The energy-saving signals introduced in the relevant standard are referred to as a paging early indication (PEI), which gives an indication to the UE on whether to receive a paging PDCCH at a target PO prior to the arrival of the target PO. The energy-saving signal is carried over the PDCCH channel in DCI format 2_7.

As shown in FIG. 5, one energy-saving signal indicates whether the UEs of one or more paging subgroups to receive paging on a corresponding PF or PO.

In the relevant standards, for further enhancement of the energy saving for the UE in the RRC_CONNECTED state, the enhancement solution of search space set group switching is introduced, and the detection of PDCCH may be skipped as required to save power, i.e., the PDCCH skipping solution. Control information related to the search space set group switching and PDCCH skipping is also carried over the PDCCH.

### 2. UE energy saving based on wake-up receiver (WUR)

For further power saving for UEs, in the relevant standards, a WUR to receive wake-up signals (WUSs) is introduced. WURs have the characteristics of ultra-low cost, ultra-low complexity and ultra-low power consumption, and receive wake-up signals mainly using an envelope detection-based approach. Therefore, the wake-up signals received by the wake-up receiver are different from the signals carried over the PDCCH defined in the relevant standards in modulation mode, waveform and the like. The wake-up signals are envelope signals acquired mainly by performing amplitude-shift-keying (ASK) modulation on carrier signals. The envelope signals are also demodulated by driving a low power consumption circuit mainly based on energy provided by radio frequency signals, and thus the envelope signals may be passive. The wake-up receiver may also be powered by the UE, and regardless of the power supply method, the power consumption of the wake-up receiver is greatly reduced compared to conventional receivers in the UE. The wake-up receiver may be combined with the UE and serve as an add-on module to the receiver in the UE, or the wake-up receiver may separately serve as a wake-up functional module of the UE.

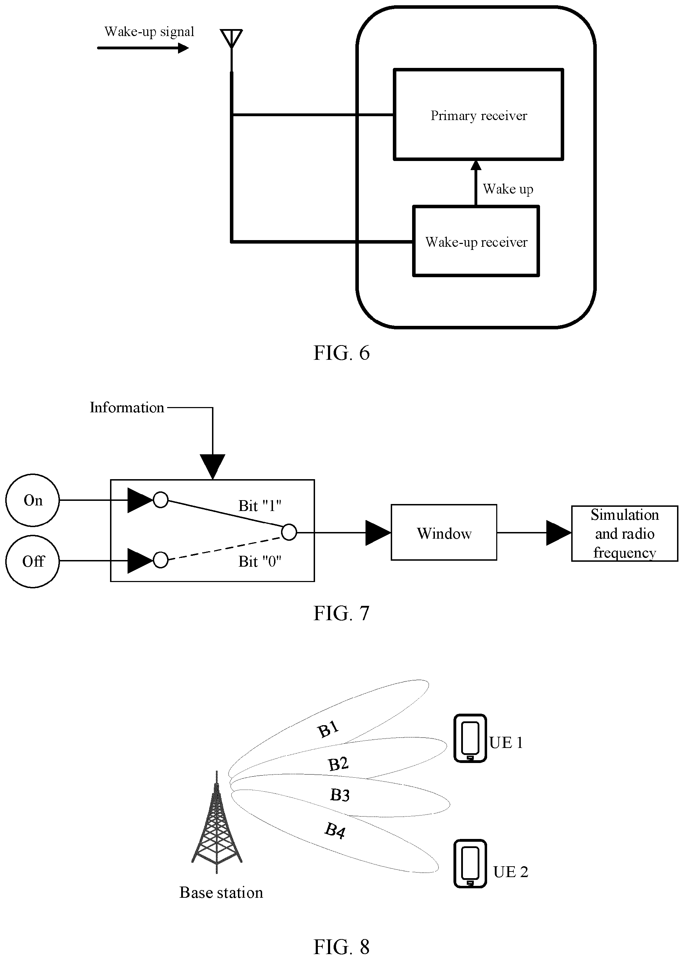

FIG. 6 shows a block diagram of a zero-power-based wake-up receiver system. The wake-up receiver receives wake-up signals, and may instruct a UE to turn on a primary receiver when necessary. Otherwise, the primary receiver of the UE may be in an off state.

Unlike a conventional receiver, the wake-up receiver does not need to be turned on and off for power saving, but may be activated by a wake-up signal at any time and receive the wake-up signal. The wake-up signal is an envelope signal acquired mainly by performing ASK modulation on the carrier signal. For example, the wake-up signal used in the 802.11 technology adopts on-off keying (OOK) modulation. The principle of the OOK modulation is to modulate the amplitude of a carrier signal into non-zero and zero values, corresponding to On and Off, respectively, which are used to represent the information bits. OOK is also referred to as binary amplitude keying (2ASK). As shown in FIG. 7, bit 1 is modulated as On, and bit 0 is modulated as Off.

### 3. Beams in 5G

Since the frequency bands adopted in the 5G system are higher than those in the LTE system, the path loss of wireless signal transmission is higher and the coverage of wireless signals is smaller in the 5G system. It is a feasible method to form beams through the base station's multi-antenna system using the beamforming technology to improve the wireless signal gain so as to compensate for the path loss. Beams have directionality, and a narrow beam only covers a partial region of a cell, but fails to cover all users in the cell. As shown in FIG. 8, the base station may transmit signals over four beams in different directions (e.g., B1, B2, B3, and B4 in FIG. 8), and beam B2 only covers UE 1, but fails to cover UE 2.

Public channels and signals in the 5G system, such as synchronization signals and broadcast channels, cover the entire cell by multi-beam scanning, which facilitates reception of the channels and signals by the UEs in the cell. For UE-specific channels and signals, the base station transmits the channels and signals to the UE over appropriate beams through beam management.

### 4. Beam management in 5G

In the NR technology, a beam failure recovery mechanism is designed for primary cells (PCell) and primary secondary cells (PSCell). The UE measures the PDCCH to determine the link quality corresponding to the downlink transmit beam. In the case that the link quality is poor, it is considered that a beam failure occurs to the downlink beam. The UE also measures a set of alternative beams, and selects a beam satisfying a threshold from the set of alternative beams as a new beam. The UE then notifies the network of the beam failure through a beam failure recovery request (BFRQ) procedure and reports the new beam. Upon receiving the BFRQ message from one UE, the network knows that a beam failure has occurred at the UE and selects to transmit a PDCCH over the new beam. Upon receiving the PDCCH from the network over the new beam, the UE considers that it has correctly received a response message from the network side.

In the NR protocol, a physical layer and a medium access control (MAC) layer need to cooperate together so as to determine the beam failure, and the specific processes are as follows.

The physical layer detects a hypothetical block error rate (BLER) of a beam corresponding to the PDCCH. In the case that the hypothetical BLERs of all beams are higher than a specified threshold, one beam failure instance (BFI) is recorded, and the physical layer reports the occurrence of one BFI to the MAC layer. The physical layer needs to report the BFI to the MAC side periodically, and in the case that the physical layer does not report the BFI at a time, it is considered that there is no BFI.

The MAC layer maintains the related beam failure detection timer and beam failure counter BFI_COUNTER. To ensure the reliability of beam failure detection, whenever the MAC layer receives a BFI report, the MAC layer starts or restarts the beam failure detection timer, and the count of the beam failure detection counter is increased by 1. In the case that the beam failure detection timer expires, the UE resets the count of the beam failure detection counter to 0, thereby ensuring that the beam failure is determined based on consecutive BFI reports. In the case that the count reaches the specified maximum value during the running period of the beam failure detection counter, the UE considers that a beam failure has occurred and initiates a random access procedure in the corresponding primary cell.

Since the actual BLER of the PDCCH transmission fails to be acquired directly, the UE calculates the corresponding possible BLER based on the measured signal-to-interference-plus-noise ratio (SINR), and thus the BLER is referred to as a hypothetical PDCCH BLER. The hypothetical BLER of the PDCCH is acquired by measuring the periodic channel state information reference signals (CSI-RSs) of corresponding single ports, i.e., whether a beam failure occurs is detected based on measurement results of the CSI-RSs. The periodic CSI-RSs of a plurality of single ports correspond to a plurality of beams.

In the case that the UE detects a beam failure, the UE also needs to acquire a downlink beam with good quality by measurement. The network preconfigures a set of reference signals, e.g., CSI-RS signals and/or synchronization signals and PBCH blocks (SSBs), used for beam failure detection (BFD) for the UE, each of the reference signals corresponds to one alternative downlink transmit beam, and the UE determines a new beam by measuring the layer 1 reference signal received power (L1-RSRP) of these alternative beams. The network preconfigures an RSRP threshold, and the UE selects one beam from the alternative beams having L1-RSRP measurement values greater than the RSRP threshold as the available new beam.

The UE needs to notify the network of the available new beam that has been found, such that the network knows that the new beam may be used for downlink transmission. This notification process is referred to as a BFRQ. When a beam failure occurs, the UE triggers a random access procedure, notifying the network side by a random access MSG1 (message 1) that a beam failure has occurred at the UE and information about the new beam selected by the UE. Specifically, the network preconfigures a set of candidate beams (e.g., CSI-RS signals and/or SSBs) for the UE and configures a corresponding physical random access channel (PRACH) resource and random preamble for each of the SSBs/CSI-RSs. When the UE determines that a beam is a new beam, the UE transmits the corresponding random preamble over the PRACH resource corresponding to the new beam. Upon receiving the random preamble, the network knows that a beam failure has occurred at the UE, and the network determines the new beam selected by the UE based on the received PRACH message and transmits a random access response on the new beam. The random access procedure is based on the exclusive PRACH resources preconfigured by the network, and thus the random access type is contention-free random access. In actual systems, it is likely that the network does not configure the exclusive beam failure recovery (BFR) resources (including a set of candidate beams and their corresponding exclusive PARCH resources) for the UE, or it is likely that the UE fails to find an available new beam from the candidate beams configured by the network. The two specific situations are as follows.
1) The network does no configure a reference signal used for NBI and a corresponding PRACH resource, i.e., the UE has no alternative beam for measurement;
2) The L1-RSRP measurement values corresponding to all candidate beams are lower than the threshold configured by the network.

When the above situations occur, the UE initiates an existing contention-based random access procedure based on the SSB signal quality measurement result in the cell to complete a reconnection with the network. Under these situations, since the network does not preconfigure an exclusive PRACH resource used for the beam failure request for the UE, when the UE transmits the corresponding MSG1, the network does not know whether the UE initiates the random access procedure due to beam failure or due to other reasons. In the NR enhancement version, for further enhancement of the beam failure recovery mechanism under these situations, the UE may carry a MAC control element (MAC CE) dedicated to indicating the BFR message in the Msg3 (message 3) or MsgA (message A) of the contention-based random access to notify the network side that the random access procedure is triggered due to a beam failure, and the BFR MAC CE may also carry information about the new beam selected by the UE.

In the NR technology, the transmission of channels or signals has specific spatial properties, which can increase the coverage and performance of the transmission. For UEs in an idle state or an inactive state, the base station does not know the distribution of the UEs in the cell, and the beams used for transmission of public channels or signals need to cover different regions. The base station uses beams of different directions to achieve the coverage of the cell by beam sweeping, i.e., beams of different directions are used at different moments to cover different regions of the cell. UEs in the connected state implement beam management by a beam management process, which is achieved by approaches and processes such as beam measurement, selection, and indication, and the base station knows the appropriate downlink and uplink beams for communicating with the UEs.

For further power saving of the UE, the primary receiver of the UE may be in an off state, and the wake-up receiver may receive a wake-up signal to wake up the primary receiver for communication. When the primary receiver is turned on, the beams used for communication may be maintained based on the beam management process described above. The measurement of a beam is achieved by measuring the reference signal transmitted on the beam. When the primary receiver is turned off, the UE fails to perform measurements and feedback. When a beam used for communication with the base station is changed due to the movement of the UE, the UE fails to report in time (the selected new beam fails to be reported), and upon the primary receiver of the UE being woken up, the base station fails to determine an appropriate beam for communication with the UE.

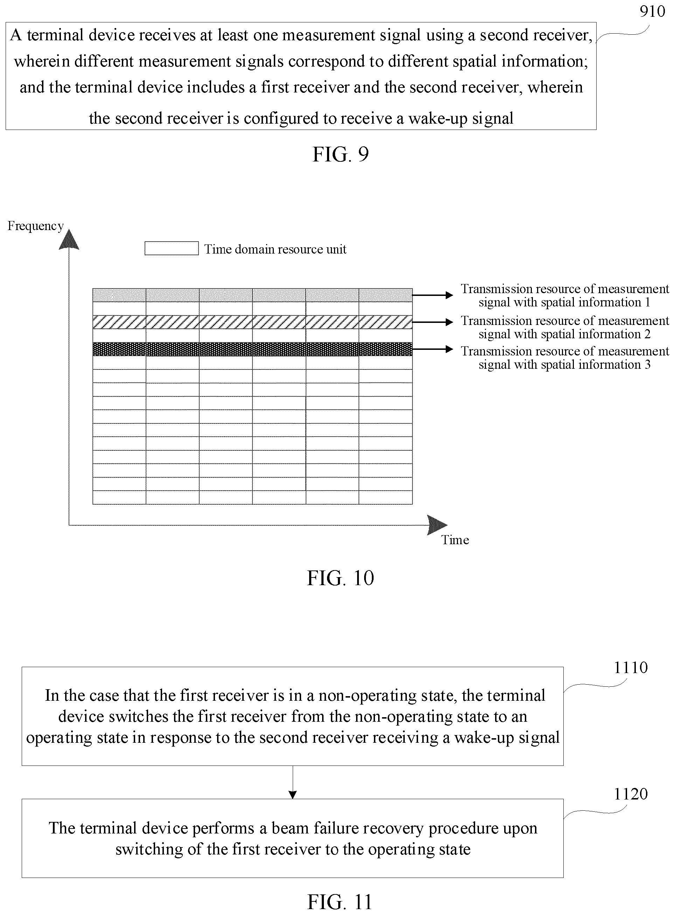

FIG. 9 is a flowchart of a method for wireless communication according to some embodiments of the present disclosure. Referring to FIG. 9, the method includes the following processes.

In process 910, a terminal device receives at least one measurement signal using a second receiver, wherein different measurement signals correspond to different spatial information; and the terminal device includes a first receiver and the second receiver, wherein the second receiver is configured to receive a wake-up signal.

The first receiver is different from the second receiver. For example, the first receiver and the second receiver have different functions, e.g., receiving different signals. In some embodiments, the first receiver has a stronger capability than the second receiver. In some embodiments, the first receiver has a higher power consumption than the second receiver.

In some embodiments, the second receiver is configured to receive a wake-up signal, and upon receiving the wake-up signal, the second receiver wakes up the first receiver, i.e., triggers the first receiver to switch from a non-operating state to an operating state.

In some embodiments, the first receiver is the primary receiver in FIG. 6, and the second receiver is the wake-up receiver in FIG. 6.

In some embodiments, the above measurement signal is a newly defined waveform signal, e.g., an ASK modulated envelope signal, and specifically a signal generated using OOK modulation. Certainly, the measurement signal may also be a signal of any other form, and the specific form of the measurement signal is not limited in the embodiments of the present disclosure.

In some embodiments, different measurement signals corresponding to different spatial information refers to that different measurement signals correspond to different beams. Exemplarily, different beams refer to beams of different directions. In some embodiments, different measurement signals are transmitted using different beams, e.g., different measurement signals are transmitted using beams of different directions.

In some embodiments, different sequences are used for different measurement signals, and different sequences correspond to different spatial information. One measurement signal may be characterized by one sequence, and different sequences are used for different measurement signals. The second receiver detects the measurement signals by detecting the sequences. Different sequences are used for measurement signals with different spatial information, and the different sequences are used by the second receiver to determine the spatial information corresponding to the detected measurement signal. For example, there are three different measurement signals, denoted as a measurement signal 1, a measurement signal 2 and a measurement signal 3, and the three different measurement signals correspond to three beams of different directions, for example, the measurement signal 1 corresponds to a beam 1, the measurement signal 2 corresponds to a beam 2, and the measurement signal 3 corresponds to a beam 3. Exemplarily, the measurement signal 1 is represented by a sequence 1, the measurement signal 2 is represented by a sequence 2, and the measurement signal 3 is represented by a sequence 3. The sequence 1, the sequence 2, and the sequence 3 correspond to the beam 1, the beam 2, and the beam 3, respectively. Assuming that the second receiver detects the sequence 2, then the spatial information corresponding to the detected measurement signal is the beam 2.

In some embodiments, different transmission resources are used for different measurement signals, and different transmission resources correspond to different spatial information. One measurement signal may be transmitted using one or a set of transmission resources, and different measurement signals may be transmitted using different transmission resources. The second receiver determines the spatial information corresponding to the measurement signal by determining the transmission resource used for the received measurement signal. That is, different transmission resources are used for measurement signals with different spatial information, for example, transmission resources at different locations are used. The locations of the transmission resources may be determined by the time domain locations and/or frequency domain locations. Exemplarily, as shown in FIG. 10, the transmission resources used for the measurement signals with different spatial information have different frequency domain locations. The second receiver determines the spatial information corresponding to the measurement signal based on the frequency domain location of the received measurement signal. For example, there are three different measurement signals, denoted as a measurement signal 1, a measurement signal 2, and a measurement signal 3, and the three different measurement signals correspond to three different beams of different directions. For example, the measurement signal 1 corresponds to a beam 1, the measurement signal 2 corresponds to a beam 2, and the measurement signal 3 corresponds to a beam 3. Exemplarily, the measurement signal 1 is transmitted over a transmission resource 1, the measurement signal 2 is transmitted over a transmission resource 2, and the measurement signal 3 is transmitted over a transmission resource 3. The transmission resource 1, the transmission resource 2, and the transmission resource 3 correspond to the beam 1, the beam 2, and the beam 3, respectively. Assuming that the second receiver detects the measurement signal transmitted over transmission resource 1, then the spatial information corresponding to the detected measurement signal is the beam 1.

In some embodiments, the above two ways may be combined, i.e., the spatial information corresponding to the measurement signal is determined based on the transmission resource and the sequence used for the measurement signal. For example, different combinations of transmission resource and sequence are used for different measurement signals, and different combinations of transmission resource and sequence correspond to different spatial information. The above different combinations of transmission resource and sequence may refer to the same transmission resource but different sequences, or may refer to the same sequence but different transmission resources, or may refer to different transmission resources and different sequences. For example, there are three different measurement signals, denoted as a measurement signal 1, a measurement signal 2, and a measurement signal 3, and the three different measurement signals correspond to three different beams of different directions. For example, the measurement signal 1 corresponds to a beam 1, the measurement signal 2 corresponds to a beam 2, and the measurement signal 3 corresponds to a beam 3. Exemplarily, the measurement signal 1 is represented by a sequence 1 and transmitted over a transmission resource 1, and the measurement signal 2 is represented by the sequence 1 and transmitted over a transmission resource 2, and the measurement signal 3 is represented by a sequence 2 and transmitted over the transmission resource 1. The combination of the sequence 1 and the transmission resource 1, the combination of the sequence 1 and the transmission resource 2, and the combination of the sequence 2 and the transmission resource 1 corresponds to the beam 1, the beam 2, and the beam 3, respectively. Assuming that the second receiver detects the sequence 2 transmitted over the transmission resource 1, then the spatial information corresponding to the detected measurement signal is the beam 3.

In some embodiments, different measurement signals carry different control information, and different control information corresponds to different spatial information. Different measurement signals may carry different control information. Upon receiving a measurement signal, the second receiver determines, based on the control information carried in the received measurement signal, the spatial information corresponding to the control information as the spatial information corresponding to the measurement signal. The different control information may be different index information, e.g., index information of different reference signals, such as index information of different reference signals such as CSI-RSs and/or SSBs. For example, there are three different measurement signals, denoted as a measurement signal 1, a measurement signal 2, and a measurement signal 3, and the three different measurement signals correspond to three different beams of different directions. For example, the measurement signal 1 corresponds to a beam 1, the measurement signal 2 corresponds to a beam 2, and the measurement signal 3 corresponds to a beam 3. Exemplarily, the measurement signal 1 carries index information 1, the measurement signal 2 carries index information 2, and the measurement signal 3 carries index information 3. The index information 1, the index information 2, and the index information 3 correspond to the beam 1, the beam 2, and the beam 3, respectively. Assuming that the measurement signal received by the second receiver carries the index information 2, then the spatial information corresponding to the received measurement signal is the beam 2.

In some embodiments, the spatial information corresponding to the measurement signal is determined based on the spatial information corresponding to a reference signal having a corresponding relationship with the measurement signal, that is, the measurement signal has a corresponding relationship with the reference signal. Since different reference signals correspond to different spatial information, the spatial information corresponding to the measurement signal may be determined based on the corresponding relationship between the measurement signal and the reference signal and the spatial information corresponding to the reference signal. Exemplarily, the reference signal includes, but is not limited to, a CSI-RS, a SSB, and the like. In some embodiments, the corresponding relationship between the measurement signal and the reference signal is a quasi-colocation (QCL) relationship.

In some embodiments, the corresponding relationship between the measurement signal and the reference signal is configured by the network device. Exemplarily, the network device indicates the corresponding relationship between the measurement signal and the reference signal, e.g., the QCL relationship, by transmitting configuration information such as RRC signaling, system messages, or physical layer signaling to the terminal device.

In some embodiments, the corresponding relationship between the measurement signal and the reference signal is predefined. For example, there is a QCL relationship in a predefined manner between different transmission resources in a transmission resource set of the measurement signals and the index information of the reference signals (e.g., CSI-RSs and/or SSBs). Alternatively, there is a QCL relationship in a predefined manner between different sequences in a sequence set of the measurement signals and the index information of the reference signals (e.g., CSI-RSs and/or SSBs). Alternatively, there is a QCL relationship in a predefined manner between the control information carried in the measurement signals and the index information of the reference signals (e.g. CSI-RSs and/or SSBs). As for the predefined manner, for example, there is a QCL relationship in an ordinal manner between locations of the transmission resources, sequences, and control information in the corresponding sets and the index information of the reference signals (e.g., CSI-RSs and/or SSBs). Taking the sequences as an example, it is predefined that eight sequences used for measurement signals in the order of sequences 0-7 have a QCL relationship with indexes 0-7 of the SSBs, respectively. The predefined corresponding relationship is similar to those for the transmission resources and carried control information.

In some embodiments, different spatial information corresponds to different beams. The terminal device determines a target beam based on the spatial information corresponding to a received measurement signal.

In some embodiments, the process that the terminal device determines the target beam based on the spatial information corresponding to the received measurement signal includes: in response to receiving one measurement signal, determining, by the terminal device, the target beam based on the spatial information corresponding to the received one measurement signal; or in response to receiving a plurality of measurement signals, determining, by the terminal device, the target beam based on the spatial information corresponding to one target measurement signal selected from the plurality of received measurement signals. The terminal device may select the target measurement signal from the plurality of received measurement signals randomly or depending on the implementation of the terminal device, which is not limited in the present disclosure.

In some embodiments, the process that the terminal device determines the target beam based on the spatial information corresponding to the received measurement signal includes: determining, by the terminal device, signal strength of the received measurement signal; and determining, by the terminal device, the target beam based on the spatial information corresponding to one target measurement signal selected from measurement signals with signal strength greater than or equal to a threshold. In the case that there exist measurement signals with signal strength greater than or equal to the threshold among the one or more measurement signals received by the terminal device, the terminal device selects one target measurement signal from the measurement signals with signal strength greater than or equal to the threshold. Exemplarily, In the case that there is only one measurement signal with signal strength greater than or equal to the threshold, the measurement signal is determined as the target measurement signal. In the case that there is a plurality of measurement signals with signal strength greater than or equal to the threshold, one of the plurality of measurement signals is randomly selected as the target measurement signal, or the measurement signal with the greatest (optimal) signal strength is selected as the target measurement signal, or the target measurement signal is selected depending on the implementation of the terminal device, which is not limited in the present disclosure. Exemplarily, the threshold may be configured by the network device or may be predefined. Exemplarily, in the case that the measurement signal is ASK modulated, the high level of the measurement signal is compared with a threshold level using a comparator to determine whether the high level is greater than or equal to the threshold.

Two ways of determining the target beam are provided in the above embodiments. In one way, considering that the second receiver may have a relatively low capability, the second receiver may only receive measurement signals transmitted over appropriate beams. Thus, the process of determining the target beam by receiving the measurement signal by the second receiver may be determined based on the detection results of the measurement signals adopting the beams. In the other way, in the case that the second receiver has a higher capability, e.g., the second receiver can measure the signal strength, the target beam may be determined based on whether the signal strength of the detected measurement signals satisfies a certain threshold.

In some embodiments, in the case that the first receiver is in the non-operating state, the terminal device receives the at least one measurement signal using the second receiver. The non-operating state may be an off state, a powered-down state, or a dormant state. The operating state is a concept opposite to the non-operating state, and the operating state is an on state, a powered-up state, or a non-dormant state (e.g., a normal operating state). The first receiver has a higher power consumption in the operating state than in the non-operating state. In order to save power for the terminal device, the first receiver may be set to be in the non-operating state in some cases, and the first receiver may be woken up to enter the operating state when necessary (e.g., in the case that the first receiver needs to work). By receiving the measurement signal for measurement using the second receiver during the period when the first receiver is in the non-operating state, beam management during the period when the first receiver is in the non-operating state is achieved.

In some embodiments, upon switching of the first receiver from the non-operating state to the operating state, the terminal device performs a beam failure recovery procedure. In some embodiments, during the beam failure recovery procedure, the terminal device indicates the target beam determined based on the measurement signal to the network device, such that the network device is capable of transmitting information to the terminal device using the target beam upon completion of the beam failure recovery.

In some embodiments, the at least one measurement signal has an association relationship with a first bandwidth part (BWP); or the at least one measurement signal has an association relationship with a second BWP; or a measurement signal having a corresponding relationship with the at least one measurement signal has an association relationship with the first BWP; or a measurement signal having a corresponding relationship with the at least one measurement signal has an association relationship with the second BWP. The first BWP is a BWP used by the first receiver upon being switched from the non-operating state to the operating state, and the second BWP is a BWP used by the first receiver prior to entering the non-operating state. Exemplarily, the association relationship refers to that the reference signal having a corresponding relationship with the at least one measurement signal is a signal configured on the first BWP or the second BWP.

In the technical solution according to the embodiments of the present disclosure, for the terminal device equipped with the first receiver and the second receiver, the second receiver is configured to receive a measurement signal in addition to a wake-up signal. Since different measurement signals correspond to different spatial information, the terminal device is capable of performing beam management based on the measurement signal received by the second receiver, thereby ensuring that the terminal device and the network device communicate with each other using an appropriate beam, such that the quality and reliability of communication are improved.

In some embodiments, by receiving the measurement signal for measurement using the second receiver during the period when the first receiver is in the non-operating state, beam management during the period when the first receiver is in the non-operating state is achieved. Upon switching of the first receiver from the non-operating state to the operating state, the terminal device is capable of performing a beam failure recovery procedure based on the measurement result from the second receiver, thereby ensuring that the terminal device and the network device communicate with each other using an appropriate beam upon the second receiver resuming work, such that quality and reliability of communication are improved.

FIG. 11 is a flowchart of a method for wireless communication according to some embodiments of the present disclosure. Referring to FIG. 11, the method is applicable to a terminal device, and the terminal device includes a first receiver and a second receiver. The method includes the following processes.

In process 1110, in the case that the first receiver is in a non-operating state, the terminal device switches the first receiver from the non-operating state to an operating state in response to the second receiver receiving a wake-up signal.

In process 1120, the terminal device performs a beam failure recovery procedure upon switching of the first receiver to the operating state.

The first receiver is different from the second receiver. For example, the first receiver and the second receiver have different functions, e.g., configured to receive different signals. In some embodiments, the first receiver has a stronger capability than the second receiver. In some embodiments, the first receiver has a higher power consumption than the second receiver.

In some embodiments, the second receiver is configured to receive a wake-up signal, and upon receiving the wake-up signal, the second receiver wakes up the first receiver, i.e., triggers the first receiver to switch from the non-operating state to the operating state.

In some embodiments, the first receiver is the primary receiver in FIG. 6, and the second receiver is the wake-up receiver in FIG. 6.

In some embodiments, the non-operating state may be an off state, a powered-down state, or a dormant state. The operating state is a concept opposite to the non-operating state, and the operating state is an on state, a powered-up state, or a non-dormant state (e.g., a normal operating state). The first receiver has a higher power consumption in the operating state than in the non-operating state. In order to save power for the terminal device, the first receiver may be set to be in the non-operating state in some cases, and the first receiver may be woken up to enter the operating state when necessary (e.g., in the case that the first receiver needs to work).

In some embodiments, in the case that the first receiver is in the non-operating state, in response to the second receiver receiving a wake-up signal from the network device, the terminal device switches the first receiver from the non-operating state to the operating state.

In some embodiments, the process that the terminal performs the beam failure recovery procedure upon switching of the first receiver to the operating state includes: determining, by the terminal device, a target reference signal satisfying a condition based on a beam failure detection result upon switching of the first receiver to the operating state; and initiating, by the terminal device, a random access procedure using a random access resource corresponding to the target reference signal. The beam failure detection result may be acquired upon switching of the first receiver to the operating state, or may be acquired when the first receiver is in the non-operating state.

In some embodiments, the terminal device receives at least one reference signal using the second receiver upon switching of the first receiver to the operating state. Different reference signals correspond to different spatial information (e.g., beams), and the terminal device determines the target reference signal satisfying the condition based on the received reference signals. Exemplarily, the signal strength of the received reference signals is measured, and the target reference signal is selected from the reference signals with signal strength greater than or equal to a threshold. Exemplarily, upon the first receiver of the terminal device being woken up, the terminal device measures the reference signals (e.g., CSI-RSs and/or SSBs), and determines a target CSI-RS or SSB satisfying the quality requirement based on the measurement results, and initiates the random access procedure using the PRACH resource corresponding to the target CSI-RS or SSB.

In some embodiments, the terminal device receives at least one reference signal using the second receiver during the period when the first receiver is in the non-operating state. Different reference signals correspond to different spatial information (e.g., beams), and the terminal determines the target reference signal satisfying the condition based on the received reference signals. Exemplarily, the signal strength of the received reference signals is measured, and the target reference signal is selected from the reference signals with signal strength greater than or equal to a threshold. In this example, the second receiver has the capability of receiving reference signals, and the reference signal may be considered as the measurement signal in the embodiment of FIG. 9. For the relevant technical details, reference may be made to the descriptions of the embodiment of FIG. 9, which are not repeated herein.

In some embodiments, the terminal device indicates the spatial information (e.g., beams) corresponding to the target reference signal to the network device by initiating the random access procedure. The random access procedure may be a contention-free random access procedure or a contention-based random access procedure.

In some embodiments, the beam failure detection timer and the beam failure counter are suspended in the case that the first receiver is in the non-operating state; and the beam failure detection timer and the beam failure counter resume running upon switching of the first receiver from the non-operating state to the operating state. The beam failure detection timer may be the beamFailureDetectionTimer described above, and the beam failure counter may be the BFI_COUNTER described above. The beam failure detection timer and the beam failure counter being suspended refers to that the timer suspends timing or the counter suspends counting but retains the current timing value or count value unchanged, and resumes timing or counting from the current timing value or count value upon resumption of running.

In some embodiments, upon switching of the first receiver from the non-operating state to the operating state, the beam failure detection timer is restarted and/or the count value of the beam failure counter is set as zero. The beam failure detection timer being restarted refers to that the timing value of the timer is initialized. The beam failure detection timer may be the beamFailureDetectionTimer described above, and the beam failure counter may be the BFI_COUNTER described above. In the case that the first receiver is in the non-operating state, the beam failure detection timer and the beam failure counter stop running. The beam failure detection timer and the beam failure counter stopping running refers to that the timer stops timing or the counter stops counting.

In the technical solution according to the embodiments of the present disclosure, for the terminal device equipped with the first receiver and the second receiver, the beam failure recovery procedure is triggered upon switching of the first receiver from the non-operating state to the operating state, that is, the beam failure recovery procedure is not triggered based on the relevant timer or counter, but rather triggered based on the wake-up of the first receiver. Due to the movement of the terminal device or other reasons during the period when the first receiver is in the non-operating state, the beam used prior to the first receiver entering the non-operating state may be no longer applicable when the first receiver is switched to the operating state again after a period of non-operating state. Therefore, by performing the beam failure recovery procedure in the case that the first receiver is woken up, an appropriate beam is re-determined, such that the quality and reliability of communication are improved.

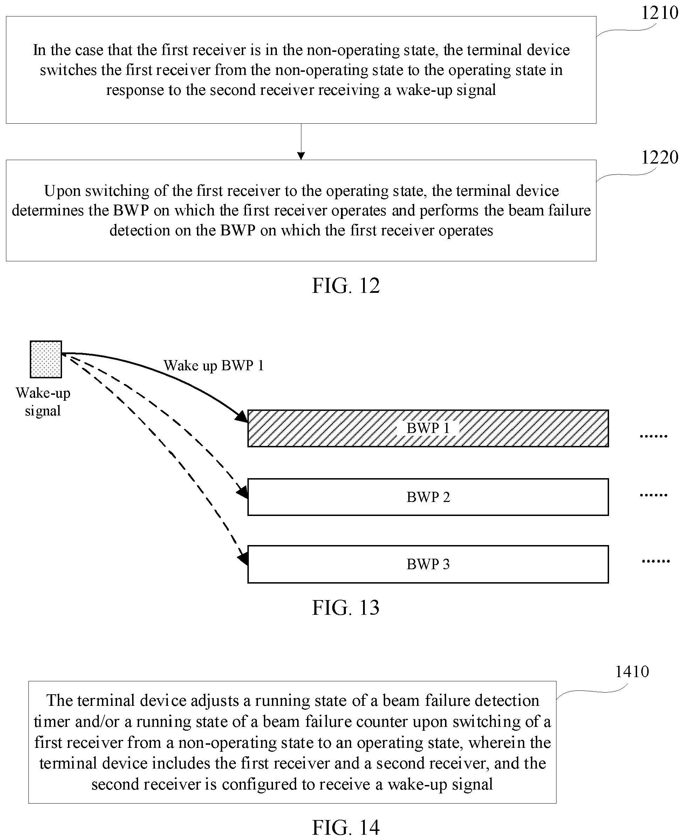

FIG. 12 is a flowchart of a method for wireless communication according to some embodiments of the present disclosure. The method is applicable to a terminal device. The terminal device includes a first receiver and a second receiver. The method includes the following processes.

In process 1210, in the case that the first receiver is in the non-operating state, the terminal device switches the first receiver from the non-operating state to the operating state in response to the second receiver receiving a wake-up signal.

In process 1220, upon switching of the first receiver to the operating state, the terminal device determines the BWP on which the first receiver operates and performs the beam failure detection on the BWP on which the first receiver operates.

For the descriptions of the first receiver, the second receiver, the operating state and the non-operating state, reference may be made to the above embodiments, and details are not described in this embodiment any further.

Upon the second receiver of the terminal device receiving the wake-up signal, it is necessary to determine the frequency domain bandwidth, e.g. the BWP, on which the first receiver is located in the case that the first receiver is woken up. In the on state, the first receiver of the terminal device needs to work on an activated downlink BWP and an activated uplink BWP. When the first receiver of the terminal device is switched off and then woken up again by a wake-up signal, the BWP on which the first receiver of the terminal device works needs to be determined.

In some embodiments, upon switching of the first receiver to the operating state, the BWP on which the first receiver operates may be determined in any one of the five following ways.

A first way: upon being switched to the operating state, the first receiver of the terminal device works on the activated BWP on which the first receiver worked in the last operating state, i.e., the last activated BWP on which the first receiver worked prior to the first receiver entering the non-operating state. Exemplarily, upon being woken up, the primary receiver of the terminal device works on the activated BWP on which the primary receiver worked during the last period when it was woken up, i.e., the last activated BWP on which the primary receiver worked prior to the primary receiver being switched off.

A second way: upon being switched to the operating state, the first receiver of the terminal device determines the BWP on which the first receiver operates based on configuration information. Exemplarily, the BWP on which the primary receiver of the terminal device works upon being woken up is determined based on the configuration information. For example, the network device configures an ID of the BWP on which the primary receiver works upon being woken up for the terminal device.

A third way: the BWP on which the first receiver of the terminal device works upon being switched to the operating state is predefined. In an example, the BWP on which the primary receiver of the terminal device works upon being woken up is a predefined BWP. For example, in the related art, the network device configures an ID of a default BWP for the terminal device over defaultDownlinkBWP-Id information. The BWP on which the primary receiver of the terminal device works upon being woken up is the default BWP. In another example, in a carrier aggregation scenario, the network device configures an ID of a default activated BWP for the terminal device upon the secondary cell (SCell) being activated over the firstActiveDownlinkBWP-Id information. Upon the primary receiver of the terminal device being woken up, the BWP on which the SCell works may be the default activated BWP. In still another example, the predefined BWP is a BWP with the smallest or largest ID among the BWPs configured by the network device for the terminal device. Specifically, the ID of the BWP is not equal to 0, i.e., the initial BWP is excluded. Specifically, the predefined BWP may also be the initial BWP.

A fourth way: upon the first receiver of the terminal device being switched to the operating state, the BWP on which the first receiver operates is an initial BWP. Exemplarily, when the terminal device is in an idle state or a non-activated state, the BWP on which the primary receiver of the terminal device works upon being woken up is the initial BWP.

A fifth way: the wake-up signal carries frequency domain information corresponding to wake-up information to determine the BWP on which the first receiver operates upon being switched to the operating state. Exemplarily, upon being woken up, the primary receiver of the terminal device works on the BWP indicated by the frequency domain information carried in the wake-up signal. Exemplarily, as shown in FIG. 13, the terminal device is configured with three BWPs, i.e., BWP 1, BWP 2, and BWP 3, the target BWP information carried in the wake-up signal indicates BWP 1 of the three BWPs, then the terminal device works on BWP 1 upon the primary receiver being woken up, that is, the activated BWP is BWP 1, and BWP 2 and BWP 3 are in an inactivated state.

No matter in which way the BWP on which the primary receiver of the terminal device works upon being woken up is determined, for the beam management process involved in the present disclosure, the terminal device performs the beam failure detection (BFD) on the determined BWP on which the primary receiver works upon being woken up. Specifically, according to the BFD method, in the case that the BWP on which the primary receiver of the terminal device works upon being woken up is the same as the BWP on which the primary receiver of the terminal device worked prior to the primary receiver being switched off last time, the beam failure recovery procedure may be performed upon the primary receiver being woken up, or the beam failure detection timer and the beam failure counter may be controlled to resume running, or the beam failure detection timer may be controlled to restart and/or the count value of the beam failure counter may be set as zero. In the case that the BWP on which the primary receiver of the terminal device works upon being woken up is different from the BWP on which the primary receiver of the terminal device worked prior to the primary receiver being switched off last time, the beam failure recovery procedure may be performed upon the primary receiver being woken up, or the beam failure detection timer may be controlled to restart and/or the count value of the beam failure counter may be set as zero.

In the technical solution of the embodiments of the present disclosure, for the terminal device equipped with the first receiver and the second receiver, upon switching of the first receiver from the non-operating state to the operating state, the terminal device determines the BWP on which the first receiver operates, and performs the beam failure detection on the BWP on which the first receiver operates. In this way, the terminal device is capable of performing the beam failure detection on the appropriate BWP upon the first receiver being woken up to determine whether the beams need to be adjusted, such that the quality and reliability of communication between the terminal device and the network device are ensured.

FIG. 14 is a flowchart of a method for wireless communication according to some embodiments of the present disclosure. Referring to FIG. 14, the method is applicable to a terminal device, and the method including the following processes.

In process 1410, the terminal device adjusts a running state of a beam failure detection timer and/or a running state of a beam failure counter upon switching of a first receiver from a non-operating state to an operating state. The terminal device includes the first receiver and a second receiver, and the second receiver is configured to receive a wake-up signal.

For the descriptions of the first receiver, the second receiver, the operating state and the non-operating state, reference may be made to the above embodiments, and details are not described in this embodiment any further.

In some embodiments, the beam failure detection timer and the beam failure counter are suspended in the case that the first receiver is in the non-operating state. The terminal device controls the beam failure detection timer and the beam failure counter to resume running upon switching of the first receiver from the non-operating state to the operating state. The beam failure detection timer may be the beamFailureDetectionTimer described above, and the beam failure counter may be the BFI_COUNTER described above. The beam failure detection timer and the beam failure counter being suspended refers to that the timer suspends timing or the counter suspends counting but retains the current timing value or count value unchanged, and resumes timing or counting from the current timing value or count value upon resumption of running.

In the related art described above, the MAC layer determines whether consecutive BFI reports occur based on the maintained beam failure detection timer (beamFailureDetectionTimer) and the beam failure counter (BFI_COUNTER). In the case that the primary receiver of the terminal device is switched off, the reference signals used for beam management fail to be measured and BFI reports fail to occur. During the period when the primary receiver is switched off, the terminal device may have moved or may be stationary. During this period, it is not clear to the terminal device whether the beams with good quality have changed. The beam failure detection timer and beam failure counter maintained at the MAC layer of the terminal device keep running until the primary receiver of the terminal device is switched off. When the primary receiver of the terminal device is switched off, the beam failure detection timer and the beam failure counter are suspended and remain in the running states at the moment of being switched off. When the primary receiver of the terminal device is woken up, the beam failure detection timer and the beam failure counter resume running. That is, the beam failure detection timer and the beam failure counter run based on the BFD reference signal detection results prior to the primary receiver of the terminal device being switched off and upon the primary receiver being woken up, without considering the BFD during the period when the primary receiver of the terminal device is switched off.

In some embodiments, upon switching of the first receiver from the non-operating state to the operating state, the terminal device controls the beam failure detection timer to restart, and/or sets the count value of the beam failure counter to zero. The beam failure detection timer may be the beamFailureDetectionTimer described above, and the beam failure counter may be the BFI_COUNTER described above. In some embodiments, in the case that the first receiver is in the non-operating state, the beam failure detection timer and the beam failure counter stop running. The beam failure detection timer and the beam failure counter stopping running refers to that the timer stops timing or the counter stops counting.

In the case that the primary receiver of the terminal device is switched off, the reference signals used for beam management fail to be measured and BFI reports fail to occur. During the period when the primary receiver is switched off, it is not clear to the terminal device whether the beams have changed. Different from the foregoing method, upon the primary receiver of the terminal device being woken up, the terminal device re-measures the BFD reference signals, and maintains the beam failure detection timer and the beam failure counter based on the measurement results, without considering the maintenance states prior to the primary receiver of the terminal device being switched off. Therefore, when the primary receiver of the terminal device is woken up, the beam failure detection timer maintained at the MAC layer is restarted and the count value of the beam failure counter is set as zero.

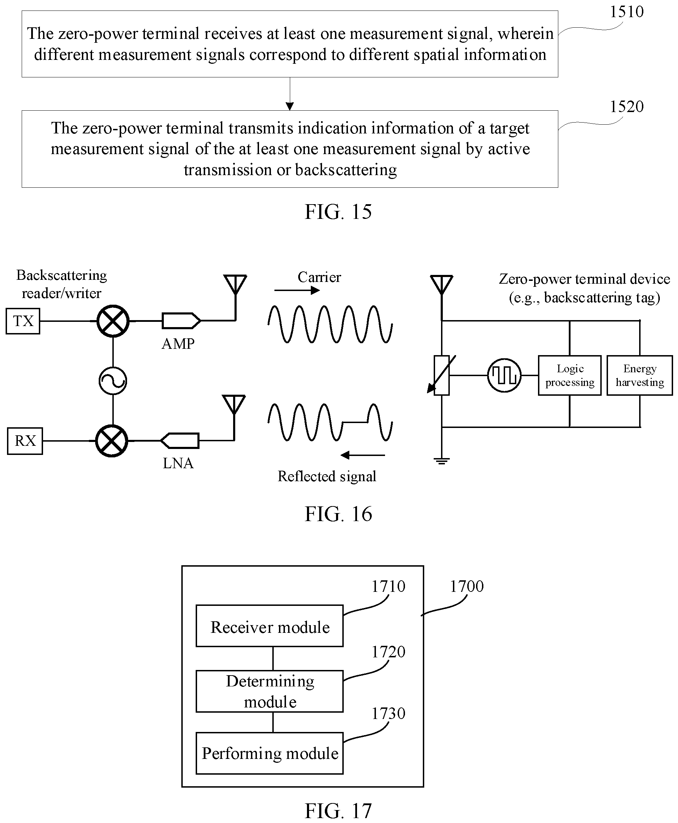

FIG. 15 is a flowchart of a method for wireless communication according to some embodiments of the present disclosure. Referring to FIG. 15, the method is applicable to a zero-power terminal device (zero-power terminal for short), and the method includes the following processes.

In process 1510, the zero-power terminal receives at least one measurement signal, wherein different measurement signals correspond to different spatial information.

In process 1520, the zero-power terminal transmits indication information of a target measurement signal of the at least one measurement signal by active transmission or backscattering.

In some embodiments, different sequences are used for different measurement signals, and different sequences correspond to different spatial information.

In some embodiments, different transmission resources are used for different measurement signals, and different transmission resources correspond to different spatial information.

In some embodiments, different measurement signals carry different control information, and different control information corresponds to different spatial information.

In some embodiments, the spatial information corresponding to the measurement signal is determined based on spatial information corresponding to a reference signal having a corresponding relationship with the measurement signal. Exemplarily, the corresponding relationship is a quasi-colocation (QCL) relationship. Exemplarily, the corresponding relationship is configured by a network device or is predefined.

In some embodiments, different spatial information corresponds to different beams.

In some embodiments, the zero-power terminal determines a target beam based on spatial information corresponding to a received measurement signal, wherein the target beam corresponds to the target measurement signal.

In some embodiments, the zero-power terminal determines, in response to receiving one measurement signal, the target beam based on the spatial information corresponding to the received one measurement signal; or the zero-power terminal determines, in response to receiving a plurality of measurement signals, the target beam based on the spatial information corresponding to one target measurement signal selected from the plurality of received measurement signals.

In some embodiments, the zero-power terminal determines signal strength of the received measurement signal, and determines the target beam based on the spatial information corresponding to one target measurement signal selected from measurement signals with signal strength greater than or equal to a threshold.

In some embodiments, the indication information of the target measurement signal includes identification information of the target measurement signal.

In some embodiments, indication information of the measurement signal is carried in the measurement signal; or indication information of the measurement signal is determined based on association information of the measurement signal. Exemplarily, the association information includes at least one of a sequence used by the measurement signal or a transmission resource used by the measurement signal.

Based on energy sources and usage modes of the zero-power terminals, the zero-power terminals may be classified into the following type.

### (1) Passive zero-power terminal

A zero-power terminal does not need a built-in battery. When the zero-power terminal is close to a network device (e.g., a reader-writer of a radio frequency identification (RFID) system), the zero-power terminal is within a near field range formed by antenna radiation of the network device. Therefore, an antenna of the zero-power terminal generates an induced current by electromagnetic induction, and the induced current drives a low-power chip circuit of the zero-power terminal. Demodulation of a forward link signal and modulation of a backward link signal are implemented. For a backscattering link, the zero-power terminal carries out signal transmission by backscattering.

It can be seen that the passive zero-power terminal does not need a built-in battery to drive either for the forward link or a reverse link, and is a true zero-power terminal.

The passive zero-power terminal does not need any battery, in which an RF circuit and a baseband circuit are very simple. For example, the passive zero-power terminal does not need devices such as a low noise amplifier (LNA), a power amplifier (PA), a crystal oscillator, and an analog-to-digital converter (ADC), and has many advantages such as small size, light weight, very low price, and long service life.

### (2) Semi-passive zero-power terminal

The semi-passive zero-power terminal is not provided with any conventional battery, which may harvest radio wave energy by an RF energy harvesting module, and at the same time, store the harvested energy in an energy storage unit (e.g., a capacitor). Upon acquiring the energy, the energy storage unit may drive a low-power chip-consumption circuit of the zero-power terminal. Demodulation of a forward link signal and modulation of a backward link signal are implemented. For a backscattering link, the zero-power terminal carries out signal transmission by backscattering.

It can be seen that the semi-passive zero-power terminal does not need any built-in battery to drive either for the forward link or a reverse link, and in operation, uses energy stored in the capacitor that is from radio energy harvested by the RF energy harvesting module, which is a true zero-power terminal.

The semi-passive zero-power terminal inherits many advantages of the passive zero-power terminal, such as small size, light weight, very low price, and long service life.

### (3) Active zero-power terminal

The zero-power terminals used under some scenarios may be active zero-power terminals, which may be provided with a built-in battery. The battery is configured to drive a low-power chip circuit of the zero-power terminal. Demodulation of a forward link signal and modulation of a backward link signal are implemented. However, for a backscattering link, the zero-power terminal carries out signal transmission by backscattering. Zero power of the active zero-power terminal is mainly reflected in the fact that signal transmission in the reverse link does not require power of the terminal but uses backscattering.

In the active zero-power terminal, the built-in battery supplies power to increase the communication distance of the zero-power terminal and increase the reliability of communication. The active zero-power terminal is applicable to some scenarios where relatively stricter requirements are imposed on a communication distance and a read latency.

In the embodiments, the zero-power terminal, as an independent communication terminal, also needs to implement beam management for communicating with the network device. The measurement signal for beam failure detection may be defined in the way provided in the method embodiment shown in FIG. 9. In the beam failure recovery procedure, the zero-power terminal needs to report a new beam to the network device for beam adjustment. Unlike the wake-up receiver described earlier in the present disclosure, the zero-power terminal is equipped with a receiver and a transmitter, and the zero-power terminal transmits signals actively or by backscattering. FIG. 16 illustrates a schematic diagram of the principle of backscattering, the zero-power terminal (the backscattering tag in FIG. 16) receives a carrier signal from a backscattering reader/writer and collects energy by the RF energy harvesting module. A low-power processing module (a logic processing module in FIG. 16) is controlled to modulate an incoming wave signal and perform backscattering. The main features of backscattering are as follows: (1) the terminal device does not actively transmit signals but implements backscattering communication by modulating the incoming wave signal; (2) the terminal device does not rely on a traditional active amplifier transmitter, but at the same time uses a low-power computing unit, which greatly reduces the complexity of hardware; and (3) power may be supplied by batteries, or backscattering may be used in combination with the energy harvesting to achieve battery-free communication.

The zero-power terminal reports the measurement results of the measurement signals used for beam failure detection to the network device by active transmission or backscattering, and the measurement results are used by the network device for beam management. Specifically, identification information of the measurement signals used for beam failure detection may be reported. The identification information is explicitly carried by the measurement signals or implicitly determined based on sequence of the measurement signals, transmission resources, or the like. The sequence of the measurement signal and the transmission resource have a corresponding relationship with the identification information. The corresponding relationship is predefined or configured by the network.

For other details not exhaustively described in this embodiment, reference may be made to the introductory description in the method embodiment shown in FIG. 9.

In the technical solution according to the embodiments of the present disclosure, a zero-power terminal performs beam management by measuring measurement signals and feeding back a target measurement signal to the network device by active transmission or backscattering. In this way, the zero-power terminal and the network device communicate with each other using appropriate beams, such that the quality and reliability of communication are improved.

The following are apparatus embodiments of the present disclosure, which may be used to perform the method embodiments of the present disclosure. For details not disclosed in the apparatus embodiments of the present disclosure, reference may be made to the method embodiments of the present disclosure.

FIG. 17 is a block diagram of an apparatus for wireless communication according to some embodiments of the present disclosure. The apparatus has the function of implementing the foregoing method embodiments on the terminal device side, and the function may be implemented by hardware or by corresponding software executed by hardware. The apparatus may be the terminal device as described above or may be provided in the terminal device. The terminal device includes a first receiver and a second receiver, wherein the second receiver is configured to receive a wake-up signal. As shown in FIG. 17, the apparatus 1700 includes a receiver module 1710.

The receiver module 1710 is configured to receive at least one measurement signal using the second receiver. Different measurement signals correspond to different spatial information.

In some embodiments, different sequences are used for different measurement signals, and different sequences correspond to different spatial information.

In some embodiments, different transmission resources are used for different measurement signals, and different transmission resources correspond to different spatial information.

In some embodiments, different measurement signals carry different control information, and different control information corresponds to different spatial information.

In some embodiments, the spatial information corresponding to the measurement signal is determined based on spatial information corresponding to a reference signal having a corresponding relationship with the measurement signal.

In some embodiments, the corresponding relationship is a quasi-colocation (QCL) relationship.

In some embodiments, the corresponding relationship is configured by a network device or is predefined.

In some embodiments, different spatial information corresponds to different beams.

In some embodiments, as shown in FIG. 17, the apparatus 1700 further includes a determining module 1720. The determining module 1720 is configured to determine a target beam based on spatial information corresponding to a received measurement signal.

In some embodiments, the determining module 1720 is configured to: in response to receiving one measurement signal, determine the target beam based on the spatial information corresponding to the received one measurement signal; or in response to receiving a plurality of measurement signals, determine the target beam based on the spatial information corresponding to one target measurement signal selected from the plurality of received measurement signals.

In some embodiments, the determining module 1720 is configured to: determine signal strength of the received measurement signal; and determine the target beam based on the spatial information corresponding to one target measurement signal selected from measurement signals with signal strength greater than or equal to a threshold.

In some embodiments, the receiver module 1710 is configured to receive the at least one measurement signal using the second receiver in a case that the first receiver is in a non-operating state.

In some embodiments, as shown in FIG. 17, the apparatus 1700 further includes a performing module 1730. The performing module 1730 is configured to perform a beam failure recovery procedure upon switching of the first receiver from the non-operating state to an operating state.

In some embodiments, the at least one measurement signal has an association relationship with a first BWP; or the at least one measurement signal has an association relationship with a second BWP; or a measurement signal having a corresponding relationship with the at least one measurement signal has an association relationship with a first BWP; or a measurement signal having a corresponding relationship with the at least one measurement signal has an association relationship with a second BWP. The first BWP is a BWP used by the first receiver upon being switched from the non-operating state to the operating state, and the second BWP is a BWP used by the first receiver prior to entering the non-operating state.

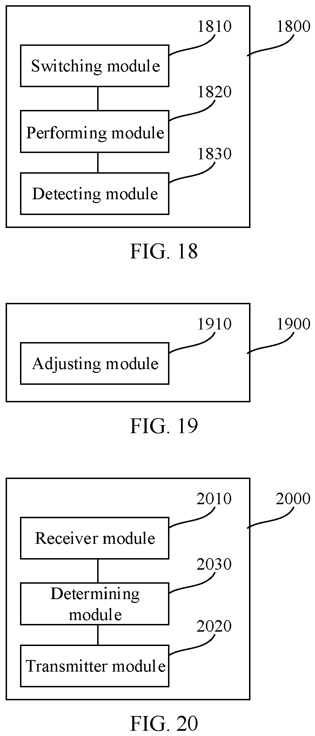

FIG. 18 is a block diagram of an apparatus for wireless communication according to some embodiments of the present disclosure. The apparatus has the function of implementing the foregoing method embodiments on the terminal device side, and the function may be implemented by hardware or by corresponding software executed by hardware. The apparatus may be the terminal device as described above or may be provided in the terminal device. The terminal device includes a first receiver and a second receiver. As shown in FIG. 18, the apparatus 1800 includes a switching module 1810 and a performing module 1820.

The switching module 1810 is configured to: in a case that the first receiver is in a non-operating state, switch the first receiver from the non-operating state to an operating state in response to the second receiver receiving a wake-up signal.

The performing module 1820 is configured to perform a beam failure recovery procedure upon switching of the first receiver to the operating state.

In some embodiments, a beam failure detection timer and a beam failure counter are suspended in the case that the first receiver is in the non-operating state; and the beam failure detection timer and the beam failure counter resume running upon switching of the first receiver from the non-operating state to the operating state.

In some embodiments, the beam failure detection timer is restarted and/or a count value of the beam failure counter is set as zero upon switching of the first receiver from the non-operating state to the operating state.

In some embodiments, as shown in FIG. 18, the apparatus 1800 further includes detecting module 1830. The detecting module 1830 is configured to: determine a BWP on which the first receiver operates upon switching of the first receiver to the operating state; and perform a beam failure detection on the BWP on which the first receiver operates.

In some embodiments, the performing module 1820 is configured to: determine, based on a beam failure detection result, a target reference signal satisfying a condition; and initiate a random access procedure using a random access resource corresponding to the target reference signal.

FIG. 19 is a block diagram of an apparatus for wireless communication according to some embodiments of the present disclosure. The apparatus has the function of implementing the foregoing method embodiments on the terminal device side, and the function may be implemented by hardware or by corresponding software executed by hardware. The apparatus may be the terminal device as described above or may be provided in the terminal device. The terminal device includes a first receiver and a second receiver, wherein the second receiver is configured to receive a wake-up signal. As shown in FIG. 19, the apparatus 1900 includes an adjusting module 1910.

The adjusting module 1910 is configured to adjust a running state of a beam failure detection timer and/or a running state of a beam failure counter upon switching of the first receiver from a non-operating state to an operating state.

In some embodiments, the beam failure detection timer and the beam failure counter are suspended in a case that the first receiver is in the non-operating state; and the adjusting module 1910 is configured to control the beam failure detection timer and the beam failure counter to resume running upon switching of the first receiver from the non-operating state to the operating state.

In some embodiments, the adjusting module 1910 is configured to control the beam failure detection timer to restart and/or set a count value of the beam failure counter as zero upon switching of the first receiver from the non-operating state to the operating state. In some embodiments, the beam failure detection timer and the beam failure counter stop running in a case that the first receiver is in the non-operating state.

FIG. 20 is a block diagram of an apparatus for wireless communication according to some embodiments of the present disclosure. The apparatus has the function of implementing the foregoing method embodiments on the terminal device side, and the function may be implemented by hardware or by corresponding software executed by hardware. The apparatus may be the zero-power terminal as described above or may be provided in the zero-power terminal. As shown in FIG. 20, the apparatus 2000 includes a receiver module 2010 and a transmitter module 2020.

The receiver module 2010 is configured to receive at least one measurement signal. Different measurement signals correspond to different spatial information.

The transmitter module 2020 is configured to transmit indication information of a target measurement signal of the at least one measurement signal by active transmission or backscattering.

In some embodiments, different sequences are used for different measurement signals, and different sequences correspond to different spatial information.

In some embodiments, different transmission resources are used for different measurement signals, and different transmission resources correspond to different spatial information.

In some embodiments, different measurement signals carry different control information, and different control information corresponds to different spatial information.

In some embodiments, the spatial information corresponding to the measurement signal is determined based on spatial information corresponding to a reference signal having a corresponding relationship with the measurement signal.

In some embodiments, the corresponding relationship is a quasi-colocation (QCL) relationship.

In some embodiments, the corresponding relationship is configured by a network device or is predefined.

In some embodiments, different spatial information corresponds to different beams.

In some embodiments, as shown in FIG. 20, the apparatus 2000 further includes a determining module 2030. The determining module 2030 is configured to determine a target beam based on spatial information corresponding to a received measurement signal. The target beam corresponds to the target measurement signal.

In some embodiments, the determining module 2030 is configured to: in response to receiving one measurement signal, determine the target beam based on the spatial information corresponding to the received one measurement signal, or in response to receiving a plurality of measurement signals, determine the target beam based on the spatial information corresponding to one target measurement signal selected from the plurality of received measurement signals.

In some embodiments, the determining module 2030 is configured to: determine signal strength of the received measurement signal; and determine the target beam based on the spatial information corresponding to one target measurement signal selected from measurement signals with signal strength greater than or equal to a threshold.

In some embodiments, the indication information of the target measurement signal includes identification information of the target measurement signal.

In some embodiments, indication information of the measurement signal is carried in the measurement signal; or indication information of the measurement signal is determined based on association information of the measurement signal.

In some embodiments, the association information includes at least one of a sequence used by the measurement signal or a transmission resource used by the measurement signal.

It should be noted that, in the case that the apparatus in the above embodiment achieves its functions, division of the above functional modules are illustrated. In practice, the above functions are assigned to and completed by different functional modules according to actual needs. That is, the apparatus is divided into different functional modules to implements all or part of the above functions.

With respect to the apparatus in the above embodiments, the specific execution methods of the modules are described in detail in the method embodiments, which are not described in detail herein.

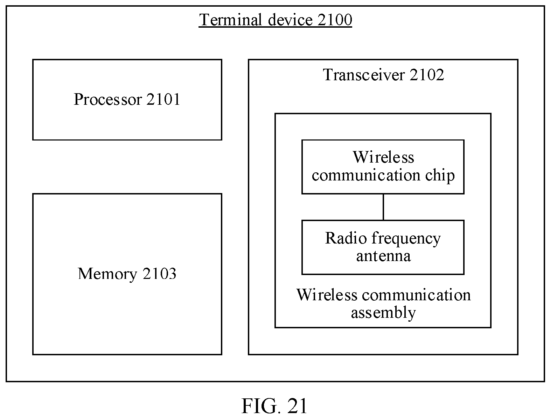

FIG. 21 is a schematic structural diagram of a terminal device according to some embodiments of the present disclosure. Referring to FIG. 21, the terminal device 2100 includes a processor 2101, a transceiver 2102 and a memory 2103.

The processor 2101 includes one or more processing cores, and the processor 2101 runs various functional applications and performs information processing by running software programs and modules.

The transceiver 2102 includes a receiver and a transmitter. For example, the receiver and the receiver are practiced as a wireless communication assembly, and the wireless communication assembly includes a wireless communication chip and a radio frequency antenna.

The memory 2103 is connected to the processor 2101 and the transceiver 2102.

The memory 2103 is configured to store one or more computer programs run by a processor. The processor 2101, when running the one or more computer programs, is caused to perform various processes performed by the terminal device in the above method embodiments.

In addition, the memory 2103 is practiced by any type of volatile or non-volatile storage device or combinations thereof. The volatile or non-volatile storage device includes, but is not limited to: a disk or optical disc, an electrically-erasable programmable read-only memory (EEPROM), an erasable programmable read-only memory (EPROM), a static random access memory (SRAM), a read-only memory (ROM), a magnetic memory, a flash memory, or a programmable read-only memory (PROM).

In some embodiments, the terminal device includes a first receiver and a second receiver, wherein the second receiver is configured to receive a wake-up signal. The transceiver 2102 is configured to receive at least one measurement signal using the second receiver, and different measurement signals correspond to different spatial information.

In some embodiments, the terminal device includes a first receiver and a second receiver, and the processor 2101 is configured to: in a case that the first receiver is in a non-operating state, switch the first receiver from the non-operating state to an operating state in response to the second receiver receiving a wake-up signal; and perform a beam failure recovery procedure upon switching of the first receiver to the operating state.

In some embodiments, the terminal device includes a first receiver and a second receiver, wherein the second receiver is configured to receive a wake-up signal. The processor 2101 is configured to adjust a running state of a beam failure detection timer and/or a running state of a beam failure counter upon switching of the first receiver from a non-operating state to an operating state.

In some embodiments, the terminal device is a zero-power terminal. The transceiver 2102 is configured to: receive at least one measurement signal, wherein different measurement signals correspond to different spatial information; and transmit indication information of a target measurement signal of the at least one measurement signal by active transmission or backscattering.

For details not elaborated in the embodiments of the present disclosure, reference may be made to the above embodiments, which are not repeated herein.

Some embodiments of the present disclosure further provide a computer-readable storage medium storing one or more computer programs. The one or more computer programs, when loaded and run by a processor in a terminal device (including a zero-power device), cause the terminal device to perform the above method for wireless communication.

In some embodiments, the computer-readable storage medium includes a ROM, a random access memory (RAM), a solid state drive (SSD), an optical disc, or the like. The RAM includes a resistance random access memory (ReRAM) and a dynamic random access memory (DRAM).

Some embodiments of the present disclosure further provide a chip. The chip includes programmable logic circuity and/or program instructions, wherein the chip, when running on a terminal device (including a zero-power device), causes the terminal device to perform the above method for wireless communication.

Some embodiments of the present disclosure further provide a computer program product including one or more computer instructions. The one or more computer instructions are stored in a computer-readable storage medium, and when read from the computer-readable storage medium and executed by a processor in a terminal device, cause the terminal device to perform the above method for wireless communication.

It should be understood that the term "indication" mentioned in embodiments of the present disclosure may be a direct indication, an indirect indication, or an indication that there is an association relationship. For example, "A indicates B" may mean that A indicates B directly, e.g., B may be acquired by A; or that A indicates B indirectly, e.g., A indicates C, and B may be acquired by C; or that an association relationship is present between A and B.

In the descriptions of the embodiments of the present disclosure, the term "correspond" may refer to a direct or indirect corresponding relationship between two items, or may refer to an association relationship between two items, or may refer to a relationship of indicating and being indicated, or configuring and being configured.

It is understandable that the term "predefined" is implemented by pre-storing a corresponding code, a table, or another manner that may indicate related information in the device (for example, the terminal device or the network device), and the specific implementations are not limited in the present disclosure. For example, the term "predefined" refers to "defined" in protocols.

In some embodiments of the present disclosure, the term "protocol" may refer to a standard protocol in the field of communication, and for example, may include an LTE protocol, an NR protocol, and a related protocol applicable to a future communication system, which is not limited in the present disclosure.

The term "a plurality of" herein means two or more. The term "and/or" herein describes an association relationship between associated objects, and indicates three types of relationships. For example, the phrase "A and/or B" means (A), (B), or (A and B). The character "/" generally represents an "or" relationship between the associated objects.

In addition, the serial number of the processes described herein only illustrates a possible sequence of performing the processes. In some embodiments, the above processes may be not performed in the above serial number, for example, processes of two different serial numbers are performed simultaneously, or processes of two different serial numbers are performed in an order opposite to that illustrated in the drawing, which is not limited in the present disclosure.

It should be understood by those skilled in the art that in the above one or more embodiments, functions described in the embodiments of the present disclosure are practiced by the hardware, the software, the firmware or any combinations thereof. In the case that the functions are practiced by the software, the functions are stored in the computer-readable storage medium or are determined as one or more instructions or codes in the computer-readable storage medium for transmission. The computer-readable storage medium includes a computer storage medium and a communication medium. The communication medium includes any medium facilitating transmission of the computer program from one place to another place. The storage medium is any available medium accessible by a general or specific computer.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A method for wireless communication, applicable to a terminal device comprising a first receiver and a second receiver, wherein the second receiver is configured to receive a wake-up signal, and the method comprises:
receiving at least one measurement signal using the second receiver, wherein different measurement signals correspond to different spatial information.

2. The method according to claim 1, wherein different sequences are used for different measurement signals, and different sequences correspond to different spatial information.

3. The method according to claim 1, wherein different transmission resources are used for different measurement signals, and different transmission resources correspond to different spatial information.

4. The method according to claim 1, wherein different measurement signals carry different control information, and different control information corresponds to different spatial information.

5. The method according to any one of claims 1 to 4, wherein the spatial information corresponding to the measurement signal is determined based on spatial information corresponding to a reference signal having a corresponding relationship with the measurement signal.

6. The method according to claim 5, wherein the corresponding relationship is a quasi-colocation (QCL) relationship.

7. The method according to claim 5 or 6, wherein the corresponding relationship is configured by a network device or is predefined.

8. The method according to any one of claims 1 to 7, wherein different spatial information corresponds to different beams.

9. The method according to claim 8, further comprising:
determining a target beam based on spatial information corresponding to a received measurement signal.

10. The method according to claim 9, wherein determining the target beam based on the spatial information corresponding to the received measurement signal comprises:
in response to receiving one measurement signal, determining the target beam based on the spatial information corresponding to the received one measurement signal; or
in response to receiving a plurality of measurement signals, determining the target beam based on the spatial information corresponding to one target measurement signal selected from the plurality of received measurement signals.

11. The method according to claim 9, wherein determining the target beam based on the spatial information corresponding to the received measurement signal comprises:
determining a signal strength of the received measurement signal; and
determining the target beam based on the spatial information corresponding to one target measurement signal selected from measurement signals with a signal strength greater than or equal to a threshold.

12. The method according to any one of claims 1 to 11, wherein receiving the at least one measurement signal using the second receiver comprises:
receiving the at least one measurement signal using the second receiver in a case that the first receiver is in a non-operating state.

13. The method according to claim 12, further comprising:
performing a beam failure recovery procedure in a case that the first receiver is switched from the non-operating state to an operating state.

14. The method according to claim 12 or 13, wherein
the at least one measurement signal has an association relationship with a first bandwidth part (BWP); or
the at least one measurement signal has an association relationship with a second BWP; or
a measurement signal having a corresponding relationship with the at least one measurement signal has an association relationship with a first BWP; or
a measurement signal having a corresponding relationship with the at least one measurement signal has an association relationship with a second BWP;
wherein the first BWP is a BWP used by the first receiver upon being switched from the non-operating state to an operating state, and the second BWP is a BWP used by the first receiver prior to entering the non-operating state.

15. A method for wireless communication, applicable to a terminal device, wherein the terminal device comprises a first receiver and a second receiver, and the method comprises:
in a case that the first receiver is in a non-operating state, switching the first receiver from the non-operating state to an operating state in response to the second receiver receiving a wake-up signal; and
performing a beam failure recovery procedure upon switching of the first receiver to the operating state.

16. The method according to claim 15, wherein
a beam failure detection timer and a beam failure counter are suspended in the case that the first receiver is in the non-operating state; and
the beam failure detection timer and the beam failure counter resume running upon switching of the first receiver from the non-operating state to the operating state.

17. The method according to claim 15, wherein
a beam failure detection timer is restarted and/or a count value of a beam failure counter is set as zero upon switching of the first receiver from the non-operating state to the operating state.

18. The method according to any one of claims 15 to 17, further comprising:
determining a bandwidth part (BWP) on which the first receiver operates upon switching of the first receiver to the operating state; and
performing a beam failure detection on the BWP on which the first receiver operates.

19. The method according to any one of claims 15 to 18, wherein performing the beam failure recovery procedure comprises:
determining, based on a beam failure detection result, a target reference signal satisfying a condition; and
initiating a random access procedure using a random access resource corresponding to the target reference signal.

20. A method for wireless communication, applicable to a terminal device comprising a first receiver and a second receiver, wherein the second receiver is configured to receive a wake-up signal, and the method comprises:
adjusting a running state of a beam failure detection timer and/or a running state of a beam failure counter upon switching of the first receiver from a non-operating state to an operating state.

21. The method according to claim 20, wherein
the beam failure detection timer and the beam failure counter are suspended in a case that the first receiver is in the non-operating state; and
adjusting the running state of the beam failure detection timer and/or the running state of the beam failure counter upon switching of the first receiver from the non-operating state to the operating state comprises:
controlling the beam failure detection timer and the beam failure counter to resume running upon switching of the first receiver from the non-operating state to the operating state.

22. The method according to claim 20, wherein adjusting the operating state of the beam failure detection timer and/or the operating state of the beam failure counter upon switching of the first receiver from the non-operating state to the operating state comprises:
controlling the beam failure detection timer to restart and/or setting a count value of the beam failure counter as zero upon switching of the first receiver from the non-operating state to the operating state.

23. The method according to claim 22, wherein the beam failure detection timer and the beam failure counter stop running in a case that the first receiver is in the non-operating state.

24. A method for wireless communication, applicable to a zero-power terminal, the method comprising:
receiving at least one measurement signal, wherein different measurement signals correspond to different spatial information; and
transmitting indication information of a target measurement signal of the at least one measurement signal by active transmission or backscattering.

25. The method according to claim 24, wherein different sequences are used for different measurement signals, and different sequences correspond to different spatial information.

26. The method according to claim 24, wherein different transmission resources are used for different measurement signals, and different transmission resources correspond to different spatial information.

27. The method according to claim 24, wherein different measurement signals carry different control information, and different control information corresponds to different spatial information.

28. The method according to any one of claims 14 to 27, wherein the spatial information corresponding to the measurement signal is determined based on spatial information corresponding to a reference signal having a corresponding relationship with the measurement signal.

29. The method according to claim 28, wherein the corresponding relationship is a quasi-colocation (QCL) relationship.

30. The method according to claim 28 or 29, wherein the corresponding relationship is configured by a network device or is predefined.

31. The method according to any one of claims 24 to 30, wherein different spatial information corresponds to different beams.

32. The method according to claim 31, further comprising:
determining a target beam based on spatial information corresponding to a received measurement signal, wherein the target beam corresponds to the target measurement signal.

33. The method according to claim 32, wherein determining the target beam based on the spatial information corresponding to the received measurement signal comprises:
in response to receiving one measurement signal, determining the target beam based on the spatial information corresponding to the received one measurement signal; or
in response to receiving a plurality of measurement signals, determining the target beam based on the spatial information corresponding to one target measurement signal selected from the plurality of received measurement signals.

34. The method according to claim 32, wherein determining the target beam based on the spatial information corresponding to the received measurement signal comprises:
determining a signal strength of the received measurement signal; and
determining the target beam based on the spatial information corresponding to one target measurement signal selected from measurement signals with a signal strength greater than or equal to a threshold.

35. The method according to any one of claims 24 to 34, wherein the indication information of the target measurement signal comprises identification information of the target measurement signal.

36. The method according to any one of claims 24 to 35, wherein
indication information of the measurement signal is carried in the measurement signal; or
indication information of the measurement signal is determined based on association information of the measurement signal.

37. The method according to claim 36, wherein the association information comprises at least one of a sequence used by the measurement signal or a transmission resource used by the measurement signal.

38. An apparatus for wireless communication, provided in a terminal device comprising a first receiver and a second receiver, wherein the second receiver is configured to receive a wake-up signal, and the apparatus comprises:
a receiver module, configured to receive at least one measurement signal using the second receiver, wherein different measurement signals correspond to different spatial information.

39. The apparatus according to claim 38, wherein different sequences are used for different measurement signals, and different sequences correspond to different spatial information.

40. The apparatus according to claim 38, wherein different transmission resources are used for different measurement signals, and different transmission resources correspond to different spatial information.

41. The apparatus according to claim 38, wherein different measurement signals carry different control information, and different control information corresponds to different spatial information.

42. The apparatus according to any one of claims 38 to 41, wherein the spatial information corresponding to the measurement signal is determined based on spatial information corresponding to a reference signal having a corresponding relationship with the measurement signal.

43. The apparatus according to claim 42, wherein the corresponding relationship is a quasi-colocation (QCL) relationship.

44. The apparatus according to claim 42 or 43, wherein the corresponding relationship is configured by a network device or is predefined.

45. The apparatus according to any one of claims 38 to 44, wherein different spatial information corresponds to different beams.

46. The apparatus according to claim 45, further comprising:
a determining module, configured to determine a target beam based on spatial information corresponding to a received measurement signal.

47. The apparatus according to claim 46, wherein the determining module is configured to:
in response to receiving one measurement signal, determine the target beam based on the spatial information corresponding to the received one measurement signal; or
in response to receiving a plurality of measurement signals, determine the target beam based on the spatial information corresponding to one target measurement signal selected from the plurality of received measurement signals.

48. The apparatus according to claim 46, wherein the determining module is configured to:
determine a signal strength of the received measurement signal; and
determine the target beam based on the spatial information corresponding to one target measurement signal selected from measurement signals with a signal strength greater than or equal to a threshold.

49. The apparatus according to any one of claims 38 to 48, wherein the receiver module is configured to:
receive the at least one measurement signal using the second receiver in a case that the first receiver is in a non-operating state.

50. The apparatus according to claim 49, further comprising:
a performing module, configured to perform a beam failure recovery procedure upon switching of the first receiver from the non-operating state to an operating state.

51. The apparatus according to claim 49 or 50, wherein
the at least one measurement signal has an association relationship with a first bandwidth part (BWP); or
the at least one measurement signal has an association relationship with a second BWP; or
a measurement signal having a corresponding relationship with the at least one measurement signal has an association relationship with a first BWP; or
a measurement signal having a corresponding relationship with the at least one measurement signal has an association relationship with a second BWP;
wherein the first BWP is a BWP used by the first receiver upon being switched from the non-operating state to the operating state, and the second BWP is a BWP used by the first receiver prior to entering the non-operating state.

52. An apparatus for wireless communication, provided in a terminal device, wherein the terminal device comprises a first receiver and a second receiver, and the apparatus comprises:
a switching module, configured to: in a case that the first receiver is in a non-operating state, switch the first receiver from the non-operating state to an operating state in response to the second receiver receiving a wake-up signal; and
a performing module, configured to perform a beam failure recovery procedure upon switching of the first receiver to the operating state.

53. The apparatus according to claim 52, wherein
a beam failure detection timer and a beam failure counter are suspended in the case that the first receiver is in the non-operating state; and
the beam failure detection timer and the beam failure counter resume running upon switching of the first receiver from the non-operating state to the operating state.

54. The method apparatus to claim 52, wherein
a beam failure detection timer is restarted and/or a count value of a beam failure counter is set as zero upon switching of the first receiver from the non-operating state to the operating state.

55. The apparatus according to any one of claims 52 to 54, further comprising: a detecting module, configured to:
determine a bandwidth part (BWP) on which the first receiver operates upon switching of the first receiver to the operating state; and
perform a beam failure detection on the BWP on which the first receiver operates.

56. The apparatus according to any one of claims 52 to 55, wherein the performing module is configured to:
determine, based on a beam failure detection result, a target reference signal satisfying a condition; and
initiate a random access procedure using a random access resource corresponding to the target reference signal.

57. An apparatus for wireless communication, provided in a terminal device comprising a first receiver and a second receiver, wherein the second receiver is configured to receive a wake-up signal, and the apparatus comprises:
an adjusting module, configured to adjust a running state of a beam failure detection timer and/or a running state of a beam failure counter upon switching of the first receiver from a non-operating state to an operating state.

58. The apparatus according to claim 57, wherein
the beam failure detection timer and the beam failure counter are suspended in a case that the first receiver is in the non-operating state;
the adjusting module is configured to control the beam failure detection timer and the beam failure counter to resume running upon switching of the first receiver from the non-operating state to the operating state.

59. The apparatus according to claim 57, wherein the adjusting module is configured to:
control the beam failure detection timer to restart and/or set a count value of the beam failure counter as zero upon switching of the first receiver from the non-operating state to the operating state.

60. The apparatus according to claim 59, wherein the beam failure detection timer and the beam failure counter stop running in a case that the first receiver is in the non-operating state.

61. An apparatus for wireless communication, provided in a zero-power terminal, the apparatus comprising:
a receiver module, configured to receive at least one measurement signal, wherein different measurement signals correspond to different spatial information; and
a transmitter module, configured to transmit indication information of a target measurement signal of the at least one measurement signal by active transmission or backscattering.

62. The apparatus according to claim 61, wherein different sequences are used for different measurement signals, and different sequences correspond to different spatial information.

63. The apparatus according to claim 61, wherein different transmission resources are used for different measurement signals, and different transmission resources correspond to different spatial information.

64. The apparatus according to claim 61, wherein different measurement signals carry different control information, and different control information corresponds to different spatial information.

65. The apparatus according to any one of claims 61 to 64, wherein the spatial information corresponding to the measurement signal is determined based on spatial information corresponding to a reference signal having a corresponding relationship with the measurement signal.

66. The apparatus according to claim 65, wherein the corresponding relationship is a quasi-colocation (QCL) relationship.

67. The apparatus according to claim 65 or 66, wherein the corresponding relationship is configured by a network device or is predefined.

68. The apparatus according to any one of claims 61 to 67, wherein different spatial information corresponds to different beams.

69. The apparatus according to claim 68, further comprising:
a determining module, configured to determine a target beam based on spatial information corresponding to a received measurement signal, wherein the target beam corresponds to the target measurement signal.

70. The apparatus according to claim 69, wherein the determining module is configured to:
in response to receiving one measurement signal, determine the target beam based on the spatial information corresponding to the received one measurement signal; or
in response to receiving a plurality of measurement signals, determine the target beam based on the spatial information corresponding to one target measurement signal selected from the plurality of received measurement signals.

71. The apparatus according to claim 69, wherein the determining module is configured to:
determine a signal strength of the received measurement signal; and
determine the target beam based on the spatial information corresponding to one target measurement signal selected from measurement signals with a signal strength greater than or equal to a threshold.

72. The apparatus according to any one of claims 61 to 71, wherein the indication information of the target measurement signal comprises identification information of the target measurement signal.

73. The apparatus according to any one of claims 61 to 72, wherein
indication information of the measurement signal is carried in the measurement signal; or
indication information of the measurement signal is determined based on association information of the measurement signal.

74. The apparatus according to claim 73, wherein the association information comprises at least one of: a sequence used by the measurement signal or a transmission resource used by the measurement signal.

75. A terminal device, comprising: a processor and a memory, wherein the memory is configured to store one or more computer programs, wherein the processor, when loading and running the one or more computer programs, is caused to perform the method as defined in any one of claims 1 to 14, or the method as defined in any one of claims 15 to 19, or the method as defined in any one of claims 20 to 23, or the method as defined in any one of claims 24 to 37.

76. A computer-readable storage medium, storing one or more computer programs, wherein the one or more computer programs, when loaded and run by a processor, cause the processor to perform the method as defined in any one of claims 1 to 14, or the method as defined in any one of claims 15 to 19, or the method as defined in any one of claims 20 to 23, or the method as defined in any one of claims 24 to 37.

77. A chip, comprising: a programmable logic circuit and/or one or more program instructions, wherein the chip, when running, is caused to perform the method as defined in any one of claims 1 to 14, or the method as defined in any one of claims 15 to 19, or the method as defined in any one of claims 20 to 23, or the method as defined in any one of claims 24 to 37.

78. A computer program product, comprising: one or more computer instructions stored in a computer-readable storage medium, wherein the one or more computer instructions, when read from the computer-readable storage medium and executed by a processor, cause the processor to perform the method as defined in any one of claims 1 to 14, or the method as defined in any one of claims 15 to 19, or the method as defined in any one of claims 20 to 23, or the method as defined in any one of claims 24 to 37.
